# EUROPEAN PATENT APPLICATION

(11) **EP 4 394 999 A1**
(43) Date of publication of application: **03.07.2024**
(21) Application number: 23219223.7
(22) Date of filing: 21.12.2023
(51) Int. Cl.: H01M 10/46, H01M 50/244, H01M 50/207, H01M 50/247, H01M 50/256, H01M 50/296

(54) **MOBILE POWER STATION**

(30) Priority: 28.12.2022 US 202263435737 P
(71) Applicant: Milwaukee Electric Tool Corporation, Brookfield, WI 53005 (US)
(72) Inventor: ROBERTS, Veronica, Milwaukee, 53224 (US)
(74) Representative: Forresters IP LLP

(57) **Abstract**

A mobile power station includes a frame having a handle and a base coupled to the frame. The base includes battery cells disposed therein. A first module is couplable to the base forming a first-base interface. The first module receives power from the battery cells through the first-base interface. A second module is couplable to the first module forming a second-first interface. The second module receives power from the battery cells through the second-first interface.

## Description

### CROSS-REFERENCE TO RELATED APPLICATIONS

The present application claims priority to U.S. provisional application number 63/435,737, filed December 28, 2022, the entire contents of which are incorporated by reference herein.

### FIELD

The present disclosure relates to mobile power stations.

### BACKGROUND

Batteries may be used to power one or more electric motors and/or to operate one or more electronic devices. A power station may include one or more batteries.

### SUMMARY

According to some embodiments, a mobile power station includes a frame having a handle and a base coupled to the frame. The base includes battery cells disposed therein. A first module is couplable to the base forming a first-base interface. The first module receives power from the battery cells through the first-base interface. A second module is couplable to the first module forming a second-first interface. The second module receives power from the battery cells through the second-first interface.

According to some embodiments, a mobile power station includes a base having battery cells and a power inverter disposed therein. The mobile power station further includes a housing coupled to the base. The housing removably receives a plurality of modules. Each of the modules includes a respective electrical terminal receiving power from the battery cells. The mobile power station further includes an electrical bus disposed in the housing. The electrical bus transmits power from the battery cells to the modules. When each of the modules is fully received within the housing, each respective electrical terminal is electrically coupled to the electrical bus.

According to some embodiments, a mobile power station includes a base having battery cells disposed therein. The base includes one of an array of recesses or an array of cleats. A module is removably coupled to the base forming a module-base interface. The module includes another of the array of recesses or the array of cleats. Each cleat is removably receivable in a respective recess. At least one recess includes a recess terminal. At least one cleat includes a cleat terminal that is electrically couplable with the recess terminal. The module receives power from the battery cells through the module-base interface.

According to some embodiments, a mobile power station comprises:
a frame including a handle;
a base coupled to the frame, the base including battery cells disposed therein;
a first module couplable to the base forming a first-base interface, the first module configured to receive power from the battery cells through the first-base interface; and
a second module couplable to the first module forming a second-first interface, the second module configured to receive power from the battery cells through the second-first interface.

The second module may be alternatively couplable to the base forming a second-base interface, the second module may be configured to receive power from the battery cells through the second-base interface.

The first-base interface may include at least one of the first module and the base may have a male component and another of the first module and the base may have a complementary female component.

At least one of the male component and the female component may span an entire width of the base.

The base may be configured to receive mains electricity to charge the battery cells.

At least one of the first module and the second module may include an electrical outlet.

At least one of the first module and the second module may include a light configured to illuminate a working area.

At least one of the first module and the second module may include a radio.

The first module may be configured to rest on the base or the second module, and the second module may be configured to rest on the first module or the base.

The mobile power station may further comprise a plurality of wheels coupled to the frame.

According to some embodiments, a mobile power station comprises:
a base including battery cells and a power inverter disposed therein;
a housing coupled to the base, the housing configured to removably receive a plurality of modules, each of the modules including a respective electrical terminal configured to receive power from the battery cells; and
an electrical bus disposed in the housing, the electrical bus configured to transmit power from the battery cells to the modules,
wherein when each of the modules is fully received within the housing, each respective electrical terminal is electrically coupled to the electrical bus.

The housing may be shaped as a rectangular parallelepiped having an open side, wherein the housing may removably receive the modules through the open side.

The housing may include a set of rollers and at least one of the modules may include a pair of tracks, or the housing may include the pair of tracks and the at least one of the modules includes the set of rollers, and
the pair of tracks may receive the rollers when the at least one module is removably received within the housing.

At least one of the modules may include a latch on a front side, the latch actuatable to facilitate removal of the at least one of the modules from the housing.

According to some embodiments, a mobile power station comprises:
a base including battery cells disposed therein, the base including at least one of an array of recesses or an array of cleats; and
a module removably coupled to the base forming a module-base interface, the module including another of the array of recesses or the array of cleats, each cleat removably receivable in a respective recess, at least one recess including a recess terminal, at least one cleat including a cleat terminal that is electrically couplable with the recess terminal,
wherein the module is configured to receive power from the battery cells through the module-base interface.

The module may be a first module,
the module-base interface may be a first-base interface,
the mobile power station may further comprise a second module removably coupled to the first module forming a second-first interface,
the first module may further include a further one of an array of recesses or an array of cleats,
the second module may include one of an array of recesses and an array of cleats,
each cleat may be removably receivable in a respective recess to couple the second module to the first module at the second-first interface, and
the second-first interface may be on an opposite side of the first module from the first-base interface.

Each of the first module and the second module may be removably couplable to the base.

Each of the first module and the second module may be configured to receive power from the battery cells.

At least one of the first module and the second module may include a battery charger.

The base may further include
a handle for directing movement of the mobile power station, and
a plurality of wheels coupled to the base, the plurality of wheels disposed opposite the handle.

Other features and aspects of the invention will become apparent by consideration of the following detailed description and accompanying drawings.

### BRIEF DESCRIPTION OF THE DRAWINGS

FIG. 1 is a perspective view of a base of a mobile power station, according to embodiments disclosed herein.
FIG. 2 is another perspective view of the base of FIG. 1.
FIG. 3 is a top perspective view of a module that is couplable to the base of FIG. 1.
FIG. 4 is a bottom perspective view of the module of FIG. 3.
FIG. 5A is a perspective view of the module of FIG. 3 coupled to the base of FIG. 1.
FIG. 5B is an exploded view of two of the modules of FIG. 3 and the base of FIG. 1.
FIG. 5C is a perspective view of two of the modules of FIG. 3 coupled to the base of FIG. 1.
FIG. 6 is a perspective view of a base of a mobile power station, according to embodiments disclosed herein.
FIG. 7 is a perspective view of a base of a mobile power station, according to embodiments disclosed herein.
FIG. 8 is a perspective view of a module that is couplable to the base of FIG. 7.
FIG. 9 is a perspective view of a base and housing of a mobile power station, according to embodiments disclosed herein.
FIG. 10 is a front perspective view of a module couplable to the housing shown in FIG. 9.
FIG. 11 is a rear perspective view of the module of FIG. 10.
FIG. 12 is a front elevation view of the mobile power station with the module of FIG. 10 coupled to the housing of FIG. 9.
FIG. 13A is a perspective view of an array of recesses, according to embodiments disclosed herein.
FIG. 13B is a perspective view of an array of cleats that is couplable to the array of recesses of FIG. 13A, according to embodiments disclosed herein.
FIG. 14A is a perspective view of an outlet that may be included in a module of FIG. 3, 8, or 10, according to embodiments disclosed herein.
FIG. 14B is a perspective view of an array of USB outlets that may be included in a module of FIG. 3, 8, or 10, according to embodiments disclosed herein.
FIG. 14C is a perspective view of a battery charger that may be included in a module of FIG. 3, 8, or 10, according to embodiments disclosed herein.
FIG. 14D is a perspective view of another battery charger that may be included in a module of FIG. 3, 8, or 10, according to embodiments disclosed herein.
FIG. 14E is a perspective view of yet another battery charger that may be included in a module of FIG. 3, 8, or 10, according to embodiments disclosed herein.
FIG. 14F is a perspective view of yet another battery charger that may be included in a module of FIG. 3, 8, or 10, according to embodiments disclosed herein.
FIG. 14G is a perspective view of yet another battery charger that may be included in a module of FIG. 3, 8, or 10, according to embodiments disclosed herein.

Before any embodiments are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

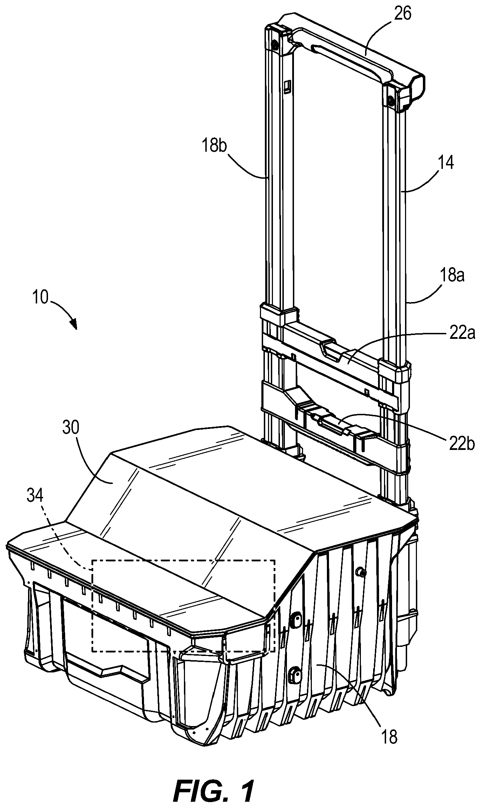

With reference to FIG. 1, a mobile power station 10 includes a frame 14 and a base 18. The frame 14 includes two longitudinal supports 18a, 18b spaced apart from each other by two crossmembers 22a, 22b. In other embodiments, the frame 14 may include more than two supports 18a, 18b or may include only one support 18a. Similarly, more or fewer crossmembers 22a, 22b may be included. A handle 26 is provided at one end of the supports 18a, 18b. In the illustrated embodiment, the handle 26 is parallel to the crossmembers 22a, 22b and connects the supports 18a, 18b. A base connection face 30 may be provided on a surface of the base 18. In the illustrated embodiment, the base connection face 30 is provided on a top surface of the base 18. The base 18 includes rechargeable battery cells 34 disposed therein. The base 18 may be configured to receive mains electricity to charge the battery cells 34.

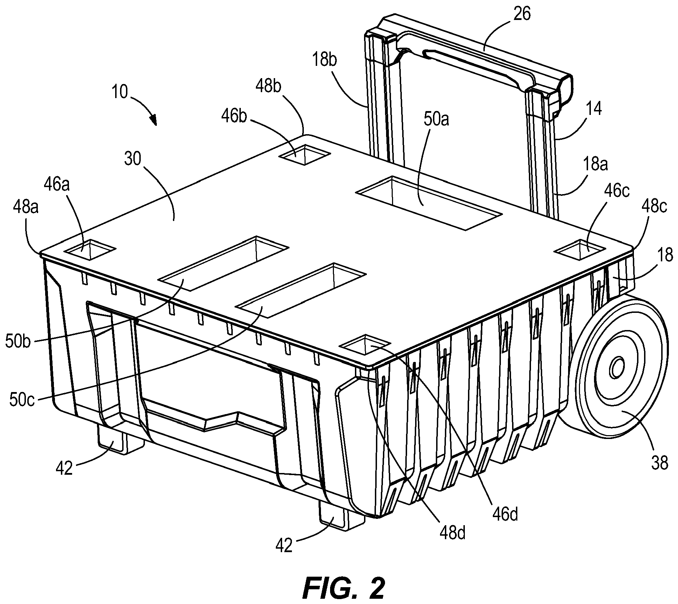

With reference to FIG. 2, the base 18 may be rollingly supported by a plurality of wheels 38 (one shown in FIG. 2). The base 18 may be further supported by one or more pegs 42 (two shown in FIG. 2). The base connection face 30 may include connection recesses 46a-46d, which in the illustrated embodiment are rectangular and may be referred to as corner connection recesses 46a-46d because they may be positioned in a corner of the base connection face 30. Each of the corner connection recesses 46a-46d may be positioned nearer to one respective corner 48a-48d of the base 18 than to any other corner 48a-48d of the base 18. The base connection face 30 may include a plurality of connection recesses 50a-50c, which in the illustrated embodiment are rectangular and may be referred to as center connection recesses 50a-50c because they may be positioned in a center of the base connection face 30. The center connection recesses 50a-50c may be rectangular, and in the illustrated embodiment, two of the center connection recesses 50b, 50c are perpendicular to the center connection recess 50a. The corner connection recesses 46a-46d, 50a-50c are among a set of features that may be referred to as "female components." In other embodiments, the connection recesses 46a-46d, 50a-50c may be different in terms of shape, size, and/or number than disclosed herein and may be positioned in other locations on the base connection face 30. One or more of the connection recesses 46a-46d, 50a-50c includes electrical connections or terminals in electrical communication with the battery cells 34.

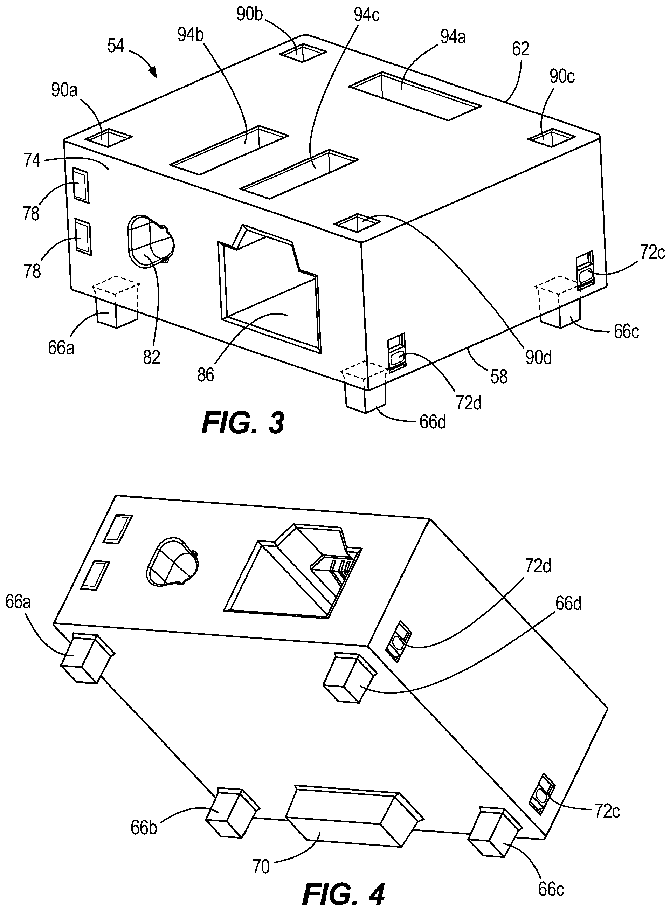

With reference to FIGS. 3 and 4, a module 54 includes a connection face 58 on a side of the module 54 and another connection face 62 on an opposite side of the module 54. The connection face 58 includes, in the illustrated embodiment, four corner connection projections 66a-66d and a center connection projection 70. The connection projections 66a-66d, 70 are among a set of features that may be referred to as "male components." In other embodiments, the connection projections 66a-66d, 70 may be different in terms of shape, size, and/or number than disclosed herein and may be positioned in other locations on the connection face 58. The connection projections 66a-66d, 70 may be configured such that each connection projection 66a-66d, 70 is receivable in a respective one of the connection recesses 46a-46d, 50a-50c on the base connection face 30. One or more of the connection projections 66a-66d, 70 may include electrical connections or terminals configured to electrically engage the electrical terminals provided within the connection recesses 46a-46d, 50a-50c when the connection projections 66a-66d, 70 are received within the connection recesses 46a-46d, 50a-50c, thereby placing the module 54 in electrical communication with the base 18 and, more specifically, with the battery cells 34. When the module 54 is coupled to the base 18 as described, a series of latches 72a-72d (two shown in FIGS. 3 and 4) may selectively inhibit removal of the module 54 from the base 18.

The module 54, and other modules described herein, may include one or more components that receive, consume, transmit, transform, or otherwise utilize electrical power received from the battery cells 34. For example, the module 54 may include an electrical outlet such as an AC outlet; a DC outlet or charger such as, for example, a charger for a battery pack capable of powering a power tool and/or a USB outlet such as a USB 1.1 outlet, a USB 2.0 outlet, a USB 3.2 Gen 1 outlet, a USB 3.2 Gen 2 outlet, a USB 3.2 Gen 2×2 outlet, a USB 4 outlet, etc.; an ethernet outlet; and/or another type of electrical outlet. As a further example, the module 54 may include a light configured to illuminate a working area. As a further example, the module 54 may include a radio.

With continued reference to FIGS. 3 and 4, an example module 54 includes a face 74, which may be a front face 74 of the module 54. The face 74 may include user controls or buttons 78, a first charging outlet 82, and a second charging outlet 86. The connection face 62 may include corner connection recesses 90a-90d and center connection recesses 94a-94c. More specifically, the connection face 62 may be similar or identical in design to the base connection face 30. In other words, the connection face 62 may be configured such that another connection face that is configured to couple to the base connection face 30 may also couple to the connection face 62 because of similarities between the base connection face 30 and the connection face 62. The connection face 58 may be a lower connection face, and the connection face 62 may be an upper connection face.

Other modules may be similar to the module 54. In other words, the module 54 may be a first module 54, and another module may be a second module 56. The first module 54, the second module 56, and any other modules may be selectively modularly attachable to and detachable from each other and the base 18 in a stack formation.

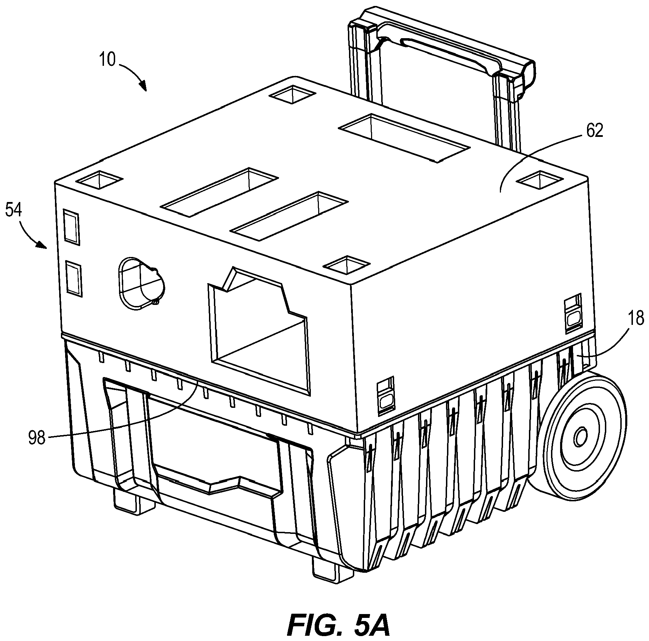

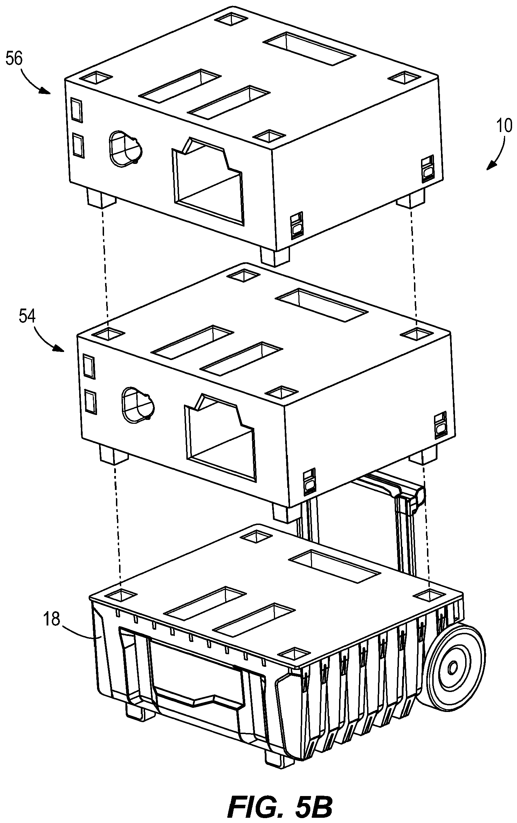

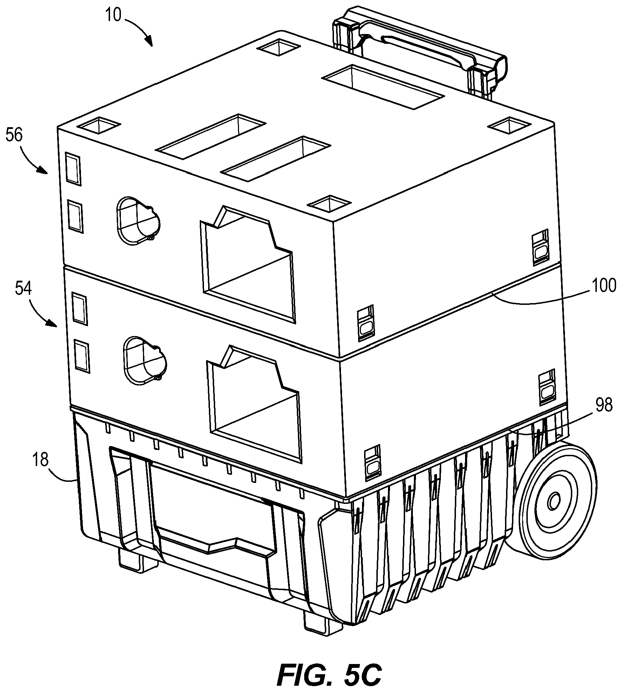

With reference to FIGS. 5A-5C, the first module 54 may be coupled to the base 18 such that the connection recesses 46a-46d, 50a-50c receive and are in electrical communication with the connection projections 66a-66d, 70, thereby forming a first-base interface 98 (which is, more generally, a module-base interface 98) between the first module 54 and the base 18. A second module 56 may be coupled to the first module 54 at the connection face 62 such that the first module 54 rests on the base 18 (as shown in FIG. 5A) and the second module 56 rests on the first module 54, thereby forming a second-first interface 100 between the second module 56 and the first module 54. In such a configuration, the second module 56 may receive power from the battery cells 34 through the second-first interface 100 (i.e., through the connection face 62 of the first module 54). The second module 56 may be alternatively couplable to the base 18, thereby forming a second-base interface, the second module 56 receiving power through the second-base interface.

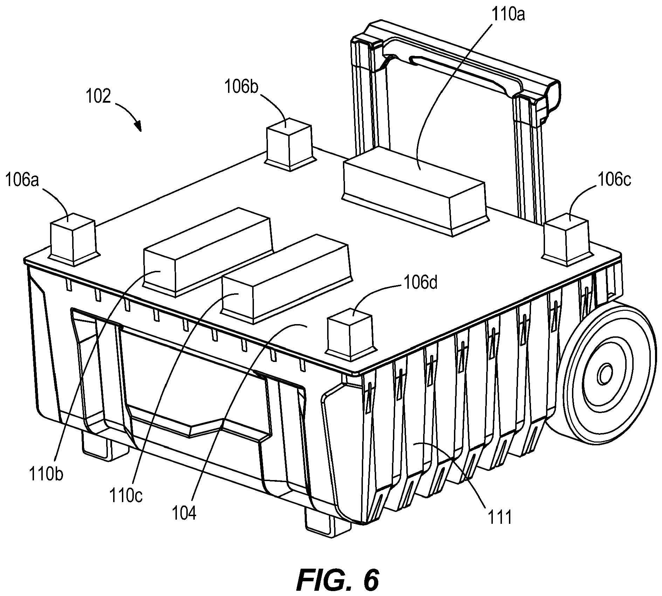

With reference to FIG. 6, another embodiment of a mobile power station 102 includes a base connection face 104 having corner connection projections 106a-106d in place of the corner connection recesses 46a-46d shown in FIG. 2. Similarly, the base connection face 104 may include center connection projections 110a-110c in place of the center connection recesses 50a-50c. The connection projections 106a-106d, 110a-110c are within a set of features that may be referred to as "male components." A base 111 of the mobile power station 102 may receive one of a plurality of modules at the base connection face 104 and otherwise may function similarly to the base 18 of the mobile power station 10 described above. The modules that are configured to couple to the base 111 may be configured such that other modules may be selectively modularly attachable to and detachable from each other and the base 111 in a stack formation as discussed above.

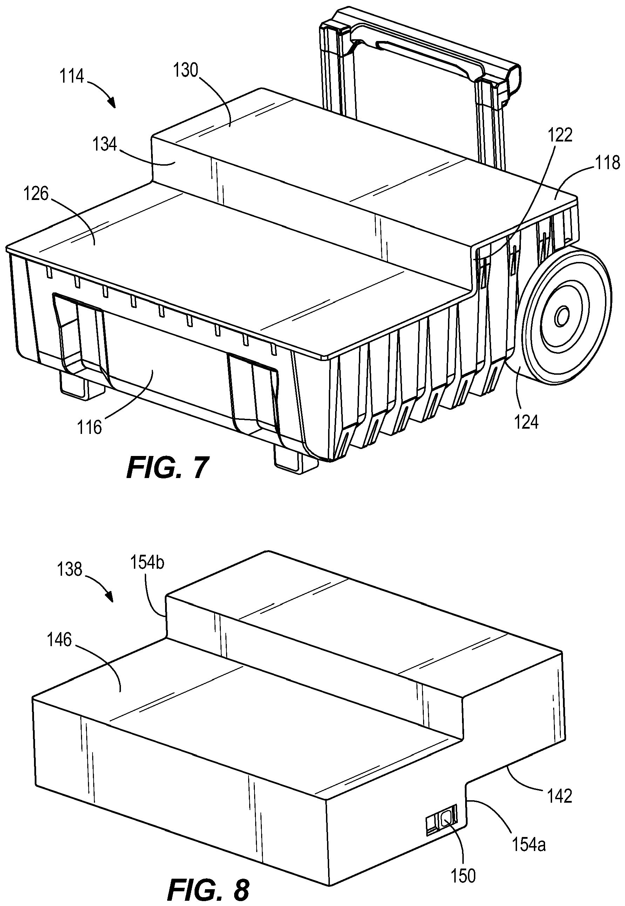

With reference to FIG. 7, another embodiment of a mobile power station 114 includes a base 116 having a base connection end 118, which may be a top side of the base, the base connection end 118 defining a base connection step 122. The base connection step 122 spans, in some embodiments, an entire width of the base between a first wheel 124 and a second wheel (not shown). The base connection step 122 includes a lower portion or female face 126, a higher portion or male face 130, and an intermediate face 134. The female face 126 defines a surface that is not on the same plane as, and in some embodiments is lower than and/or parallel to, the higher portion or male face 130. The intermediate face 134 connects the female face 126 and the male face 130 and, in some embodiments, may be vertical. One or more of the female face 126, the male face 130, or the intermediate face 134 may include connectors, which may be similar to, for example, one or more of the connection recesses 46a-46d, 50a-50c or the connection projections 66a-66d, 70.

With reference to FIG. 8, another embodiment of a module 138 is configured to couple to the base connection end 118. The module 138 may be similar in many respects to the module 54 described herein. Other detachable modules similar to the module 138 may be provided such that the module 138 may be referred to as a first module 138 to distinguish the first module 138 from a second module as described previously. The first module 138 includes a connection end 142 on a side of the first module 138 and another connection end 146 on an opposite side of the first module 138.

With continued reference to FIG. 8, the connection ends 142, 146 each define respective connection steps 154a, 154b that may be complementary to the base connection step 122. In some embodiments, the connection steps 154a, 154b span an entire width of the base 116, for instance, between the first wheel 124 and the second wheel (FIG. 7). The connection ends 142, 146 may include one or more connection projections 66a-66d, 70 and/or connection recesses 46a-46d, 50a-50c as described above, thereby enabling the first module 138 to mechanically and electrically couple to the base 116 at the base connection end 118, thereby forming a first-base interface as described previously. More specifically, the connection end 142 of the first module 138 is configured to couple to the base connection end 118, and the connection end 146 of the first module 138 is configured to couple to a connection face 142, 146 of a second module, thereby forming a second-first interface as described previously. Alternatively, the second module may selectively couple directly to the base 116, and the connection end 142 of the first module 138 may couple to the connection end 146 of the second module. When one or more modules 138 are coupled to the base 116, the base 116 and the modules 138 may form a stack. When the first module 138 is coupled to the base 116 or to another module 138 as described, a latch 150 may selectively facilitate removal of the first module 138 from the base 116 or from the other module 138.

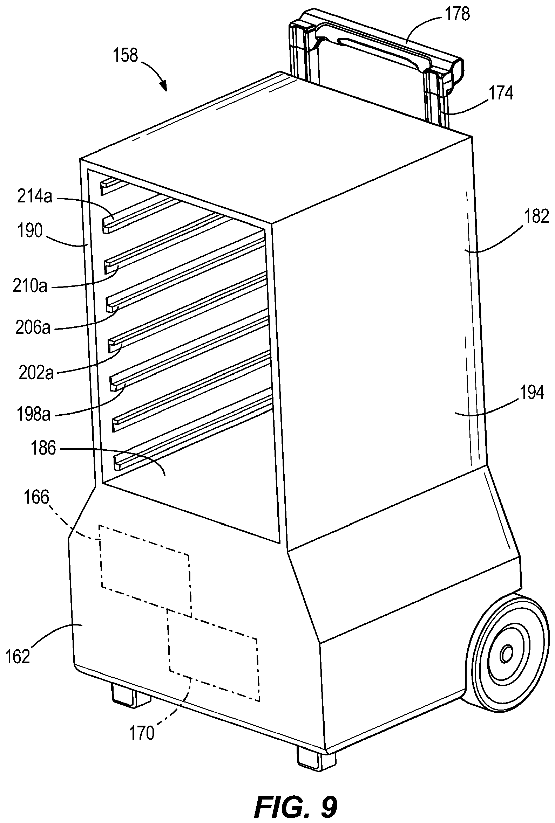

With reference to FIG. 9, another embodiment of a mobile power station 158 includes a base 162 with battery cells 166 disposed therein in communication with a power inverter 170, also disposed in the base 162. A frame 174 is mounted to the base and may have a handle 178 positioned at one end and a plurality of wheels (not shown) positioned on another end. The mobile power station 158 further includes a housing 182 mounted on a side, and in the illustrated embodiment on a top side, of the base 162. The housing 182 may be similar to a server rack cabinet and may be shaped as a rectangular parallelepiped having one or more open sides 186. In the illustrated embodiment, the housing 182 includes a first (left) side 190 and an opposite second (right) side 194. The first side 190 includes a plurality of tracks 198a, 202a, 206a, 210a, 214a. The second side 194 also includes a plurality of tracks (not shown). More specifically, the second side 194 includes a matching track that is associated with and opposite to each one of the tracks 198a, 202a, 206a, 210a, 214a, thereby defining a plurality of opposite pairs of tracks on the sides 190, 194. The tracks may be configured to receive rollers 254 or other mounting features of modules (described later).

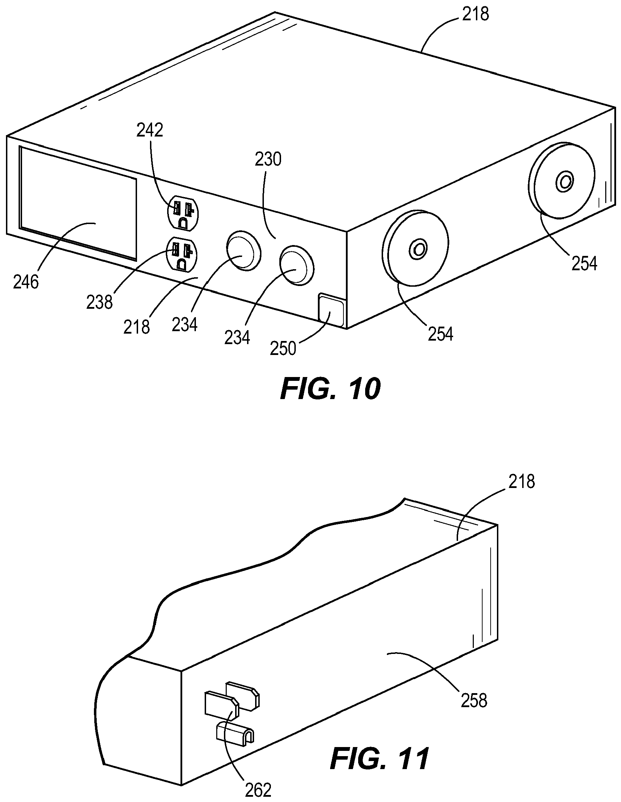

With reference to FIG. 10, each of the modules 218 may include a face 230 on a side, and particularly on a front side, of the modules 218. The face 230 may include user controls or buttons 234, a first charging outlet 238, a second charging outlet 242, and a display 246. Each of the modules 218 may include an external latch 250 that selectively facilitates removal of the module 218 from the housing 182. Rollers 254 may be provided on opposite sides of the module 218. The rollers 254 are configured to be received within the tracks provided in the housing 182. In other embodiments, the rollers 254 may be provided on the housing 182, and the tracks may be provided on the modules 218. Further, other methods of removably coupling the modules 218 to the housing 182 are possible, including a system of pegs and holes. Each of the modules 218 may be of a consistent shape and size so that each module 218 may be removably installed in a plurality of locations within the housing 182.

With reference to FIG. 11, the modules 218 may include a side 258, which may be a rear side, having an electrical terminal 262. The terminal 262 may be configured such that the terminal 262 may electrically engage one of the terminals 226, thereby placing the module 218 in electrical communication with the base 162 and more particularly with the battery cells 166. In other words, a force of sliding the module 218 into the housing 182 may push the terminal 262 into engagement with the terminal 226 such that, when the module 218 is fully received within the housing 182, the terminal 262 is electrically coupled to the terminal 226, to the bus 222, and to the battery cells 166. In other embodiments, the modules 218 may be electrically connected to the base 162 through external wired connections.

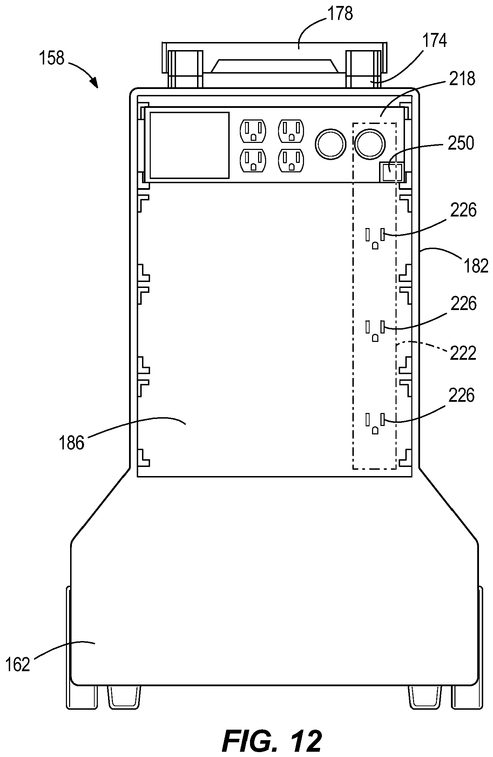

With reference to FIG. 12, the open side 186 of the housing 182 removably receives a plurality of modules 218 into the housing 182. The modules 218 may be received such that they are vertically arranged inside the housing 182. With reference to FIG. 10, an electrical bus 222 is mounted to the housing 182. The bus 222 is in electrical communication with the battery cells 166 and may include a plurality of electrical terminals 226.

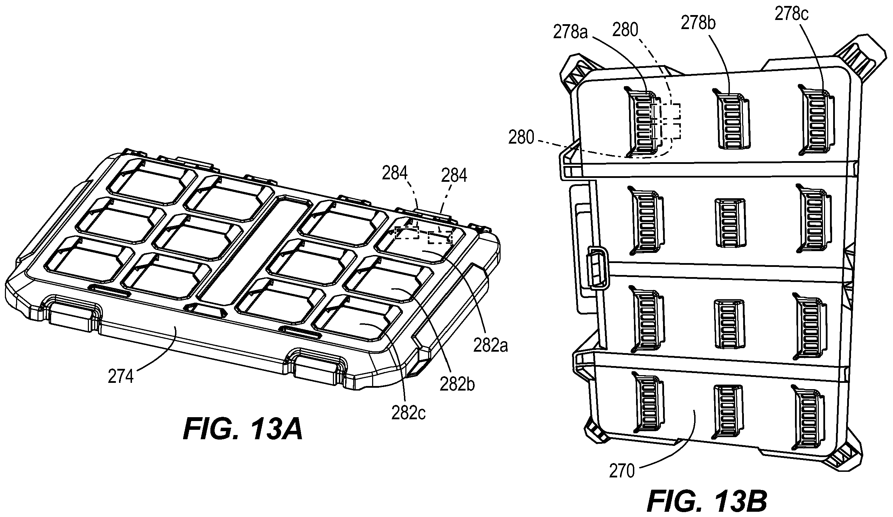

With reference to FIGS. 13A, and 13B, some embodiments of a mobile power station 10, 102 may include a connection system having an array of cleats 270 that are received within an array of recesses 274 instead of or in addition to, for example, the base connection face 30 and the connection faces 58, 62. One or more cleats 278a, 278b, 278c, etc. in the array of cleats 270 may include a cleat terminal 280 positioned within a lip of the cleat 278a, 278b, 278c, etc. or otherwise on one of the cleats 278a, 278b, 278c, etc. One or more recesses 282a, 282b, 282c, etc. may include a recess terminal 284 positioned within a lip of the recess 282a, 282b, 282c, etc. or otherwise on or within one of the recesses 282a, 282b, 282c, etc. When the array of cleats 270 is coupled to the array of recesses 274, the one or more cleat terminals 280 may electrically couple to the one or more recess terminals 284. The array of cleats 270 may be mounted to one or more of the modules 54 or another module, and the array of recesses 274 may be mounted to the base 18 or another base or vice versa. In other words, one of the array of cleats 270 or the array of recesses 274 may be mounted to the base connection face 30 (FIG. 2). Further, one of the array of cleats 270 or the array of recesses 274 may be mounted to one of the two connection faces 58, 62, and the other of the array of cleats 270 or the array of recesses 274 may be mounted to the other of the two connection faces 58, 62. As a result, the array of cleats 270 and the array of recesses 274 may mechanically and electrically connect the base 18 (FIG. 5A) to one or more of the modules 54 in a selective and removable fashion such that the modules 54 may receive power from the battery cells 34 when the array of cleats 270 is coupled to the array of recesses 274.

As discussed previously, a plurality of modules 54, 56, each configured to perform a similar or different electrical, mechanical, and/or electronic function, may be alternatively couplable to the base 18. In other words, the first module 54 may removably mount to the base 18 via an array of cleats 270 and an array of recesses 274, thereby forming a first-base interface 98 upon mounting. The second module 56 may removably mount to the first module 54 via an array of cleats 270 and an array of recesses 274 that form a second-first interface 100 upon mounting. The base 18, the first module 54, and the second module 56 may form a stack.

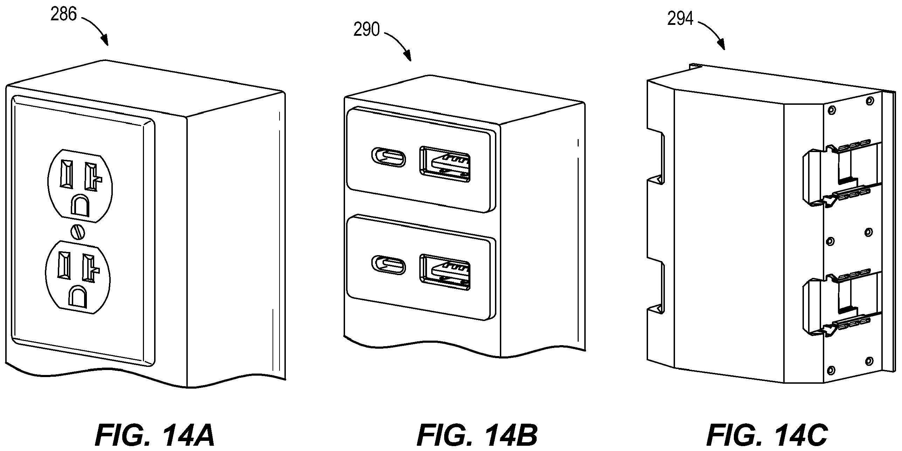

With reference to FIG. 14A, an outlet 286 that may be included in a module 54, 56, 138, 218 may be an AC outlet.

With reference to FIG. 14B, an array of outlets 290 that may be included in a module 54, 56, 138, 218 may include various types of DC outlets such as USB outlets.

With reference to FIG. 14C, a battery charger 294 may be included in a module 54, 56, 138, 218.

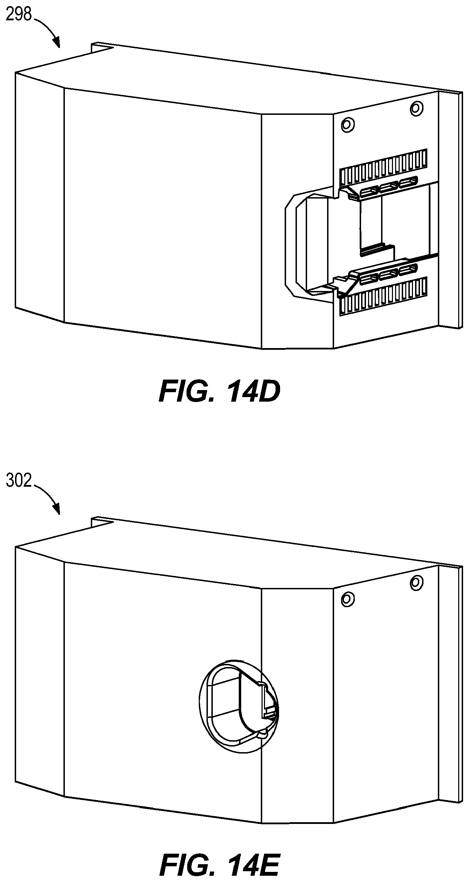

With reference to FIG. 14D, a battery charger 298 may be included in a module 54, 56, 138, 218.

With reference to FIG. 14E, a battery charger 302 may be included in a module 54, 56, 138, 218.

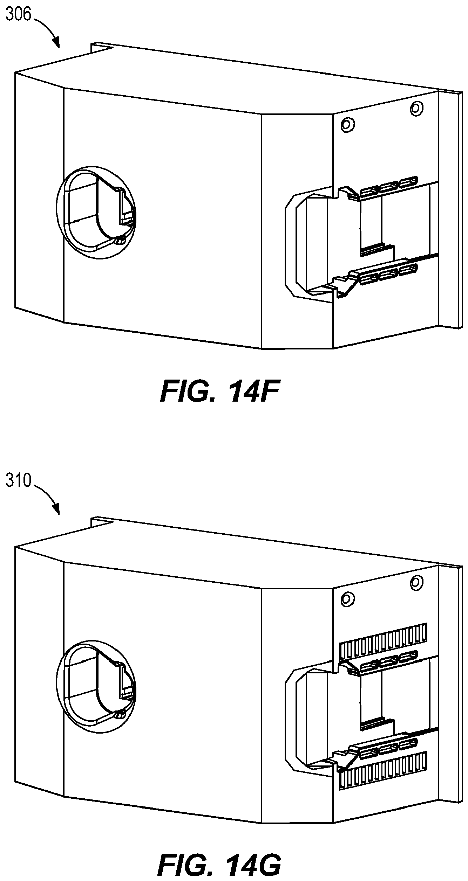

With reference to FIG. 14F, a battery charger 306 may be included in a module 54, 56, 138, 218.

With reference to FIG. 14G, a battery charger 310 may be included in a module 54, 56, 138, 218.

Any of the modules disclosed herein may perform one or more functions. For example, modules may include devices such as battery chargers, AC outlets, DC outlets, lights, radios, clocks, speakers, fans, computers, monitors, dust extractors, etc. The battery cells disclosed herein may be pouch cells.

Features from one embodiment may be combined with features from another embodiment to form yet another embodiment. Variations and modifications exist within the scope and spirit of one or more independent aspects of the invention as described. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A mobile power station comprising:
   a frame including a handle;
   a base coupled to the frame, the base including battery cells disposed therein;
   a first module couplable to the base forming a first-base interface, the first module configured to receive power from the battery cells through the first-base interface; and
   a second module couplable to the first module forming a second-first interface, the second module configured to receive power from the battery cells through the second-first interface.
2. The mobile power station of clause 1, wherein the second module is alternatively couplable to the base forming a second-base interface, the second module configured to receive power from the battery cells through the second-base interface.
3. The mobile power station of clause 1, wherein the first-base interface includes at least one of the first module and the base having a male component and another of the first module and the base having a complementary female component.
4. The mobile power station of clause 3, wherein at least one of the male component and the female component spans an entire width of the base.
5. The mobile power station of clause 1, wherein the base is configured to receive mains electricity to charge the battery cells.
6. The mobile power station of clause 1, wherein at least one of the first module and the second module includes an electrical outlet.
7. The mobile power station of clause 1, wherein at least one of the first module and the second module includes a light configured to illuminate a working area.
8. The mobile power station of clause 1, wherein at least one of the first module and the second module includes a radio.
9. The mobile power station of clause 1, wherein
   the first module is configured to rest on the base or the second module, and
   the second module is configured to rest on the first module or the base.
10. The mobile power station of clause 1, further comprising a plurality of wheels coupled to the frame.
11. A mobile power station comprising:
   a base including battery cells and a power inverter disposed therein;
   a housing coupled to the base, the housing configured to removably receive a plurality of modules, each of the modules including a respective electrical terminal configured to receive power from the battery cells; and
   an electrical bus disposed in the housing, the electrical bus configured to transmit power from the battery cells to the modules,
   wherein when each of the modules is fully received within the housing, each respective electrical terminal is electrically coupled to the electrical bus.
12. The mobile power station of clause 11, wherein the housing is shaped as a rectangular parallelepiped having an open side, wherein the housing removably receives the modules through the open side.
13. The mobile power station of clause 11, wherein
   the housing includes a set of rollers and at least one of the modules includes a pair of tracks, or the housing includes the pair of tracks and the at least one of the modules includes the set of rollers, and
   the pair of tracks receives the rollers when the at least one module is removably received within the housing.
14. The mobile power station of clause 11, wherein at least one of the modules includes a latch on a front side, the latch actuatable to facilitate removal of the at least one of the modules from the housing.
15. A mobile power station comprising:
   a base including battery cells disposed therein, the base including at least one of an array of recesses or an array of cleats; and
   a module removably coupled to the base forming a module-base interface, the module including another of the array of recesses or the array of cleats, each cleat removably receivable in a respective recess, at least one recess including a recess terminal, at least one cleat including a cleat terminal that is electrically couplable with the recess terminal,
   wherein the module is configured to receive power from the battery cells through the module-base interface.
16. The mobile power station of clause 15, wherein
   the module is a first module,
   the module-base interface is a first-base interface,
   the mobile power station further comprises a second module removably coupled to the first module forming a second-first interface,
   the first module further includes a further one of an array of recesses or an array of cleats,
   the second module includes one of an array of recesses and an array of cleats,
   each cleat is removably receivable in a respective recess to couple the second module to the first module at the second-first interface, and
   the second-first interface is on an opposite side of the first module from the first-base interface.
17. The mobile power station of clause 16, wherein each of the first module and the second module is removably couplable to the base.
18. The mobile power station of clause 17, wherein each of the first module and the second module is configured to receive power from the battery cells.
19. The mobile power station of clause 18, wherein at least one of the first module and the second module includes a battery charger.
20. The mobile power station of clause 19, wherein the base further includes
   a handle for directing movement of the mobile power station, and
   a plurality of wheels coupled to the base, the plurality of wheels disposed opposite the handle.

## Claims

1. A mobile power station comprising:
a frame including a handle;
a base coupled to the frame, the base including battery cells disposed therein;
a first module couplable to the base forming a first-base interface, the first module configured to receive power from the battery cells through the first-base interface; and
a second module couplable to the first module forming a second-first interface, the second module configured to receive power from the battery cells through the second-first interface.

2. The mobile power station of claim 1, wherein the second module is alternatively couplable to the base forming a second-base interface, the second module configured to receive power from the battery cells through the second-base interface.

3. The mobile power station of claim 1 or 2, wherein the first-base interface includes at least one of the first module and the base having a male component and another of the first module and the base having a complementary female component, preferably wherein at least one of the male component and the female component spans an entire width of the base.

4. The mobile power station of any preceding claim, wherein the base is configured to receive mains electricity to charge the battery cells, and/or
wherein at least one of the first module and the second module includes an electrical outlet, and/or wherein at least one of the first module and the second module includes a light configured to illuminate a working area, and/or
wherein at least one of the first module and the second module includes a radio.

5. The mobile power station of any preceding claim, wherein
the first module is configured to rest on the base or the second module, and
the second module is configured to rest on the first module or the base.

6. The mobile power station of any preceding claim, further comprising a plurality of wheels coupled to the frame.

7. A mobile power station comprising:
a base including battery cells and a power inverter disposed therein;
a housing coupled to the base, the housing configured to removably receive a plurality of modules, each of the modules including a respective electrical terminal configured to receive power from the battery cells; and
an electrical bus disposed in the housing, the electrical bus configured to transmit power from the battery cells to the modules,
wherein when each of the modules is fully received within the housing, each respective electrical terminal is electrically coupled to the electrical bus.

8. The mobile power station of claim 7, wherein the housing is shaped as a rectangular parallelepiped having an open side, wherein the housing removably receives the modules through the open side.

9. The mobile power station of claim 7 or 8, wherein
the housing includes a set of rollers and at least one of the modules includes a pair of tracks, or the housing includes the pair of tracks and the at least one of the modules includes the set of rollers, and
the pair of tracks receives the rollers when the at least one module is removably received within the housing.

10. The mobile power station of claim 7, 8 or 9, wherein at least one of the modules includes a latch on a front side, the latch actuatable to facilitate removal of the at least one of the modules from the housing.

11. A mobile power station comprising:
a base including battery cells disposed therein, the base including at least one of an array of recesses or an array of cleats; and
a module removably coupled to the base forming a module-base interface, the module including another of the array of recesses or the array of cleats, each cleat removably receivable in a respective recess, at least one recess including a recess terminal, at least one cleat including a cleat terminal that is electrically couplable with the recess terminal,
wherein the module is configured to receive power from the battery cells through the module-base interface.

12. The mobile power station of claim 11, wherein
the module is a first module,
the module-base interface is a first-base interface,
the mobile power station further comprises a second module removably coupled to the first module forming a second-first interface,
the first module further includes a further one of an array of recesses or an array of cleats,
the second module includes one of an array of recesses and an array of cleats,
each cleat is removably receivable in a respective recess to couple the second module to the first module at the second-first interface, and
the second-first interface is on an opposite side of the first module from the first-base interface.

13. The mobile power station of claim 11 or 12, wherein each of the first module and the second module is removably couplable to the base, preferably wherein each of the first module and the second module is configured to receive power from the battery cells.

14. The mobile power station of claim 11, 12 or 13, wherein at least one of the first module and the second module includes a battery charger.

15. The mobile power station of any one of claims 11 to 14, wherein the base further includes
a handle for directing movement of the mobile power station, and
a plurality of wheels coupled to the base, the plurality of wheels disposed opposite the handle.
